# DEMANDE DE BREVET EUROPEEN

(11) **EP 0 789 996 A1**
(43) Date de publication de la demande: **20.08.1997**
(21) Numéro de dépôt: 97102400.5
(22) Date de dépôt: 14.02.1997
(51) Int. Cl.: A01J 25/13

(54) **Moule pour fromages à pâte pressée**

(30) Priorité: 16.02.1996 FR 9601924
(71) Demandeur: Delacour, Frédéric, 37130 Langeais (FR)
(72) Inventeur: Delacour, Frédéric, 37130 Langeais (FR)
(74) Mandataire: Kügele, Bernhard

(57) **Abrégé**

Le moule comporte une partie récipient (1) ayant une forme généralement cylindrique ou prismatique, ainsi qu'un fond (3) et un couvercle (5). Les parties (2, 4, 6) du moule en contact avec la pâte sont fabriquées en un matériau plastique microperforé. La partie récipient (1) comporte une paroi (2) en forme d'une bande formant une boucle ronde, carrée ou autre, selon la forme du moule. Cette paroi (2) comporte une fente verticale (13) créant deux extrémités libres (14) et (15) et le moule comporte un moyen de serrage (18, 19, 20, 21, 22) permettant de serrer ces extrémités (14, 15) de la bande (2) l'une contre l'autre de façon à éliminer toute discontinuité au niveau de la surface intérieure du récipient et d'écarter ces extrémités (14, 15) pour agrandir la section du moule de manière à faciliter le démoulage.

## Description

L'invention concerne un moule pour fromage à pâte pressée, comportant une partie récipient pour la pâte ayant une forme généralement cylindrique ou prismatique, ainsi qu'un fond et un couvercle essentiellement parallèles l'un à l'autre et perpendiculaires à l'axe du récipient, les parties du moule en contact avec la pâte étant fabriquées en un matériau plastique présentant des microperforations permettant l'évacuation du liquide lors du pressage de la pâte, au moins le couvercle étant conçu pour être inséré de façon axiale dans la partie récipient et capable de glisser dans la partie récipient à la manière d'un piston, le couvercle et le fond présentant une forme correspondant essentiellement à la section du moule.

Dans le domaine de la fabrication des fromages à pâte pressée on sait que l'étape de pressage a très une grande importance. Selon les techniques industrielles actuelles, le pressage est effectué au moyen d'un foncet sur un bloc de caillé contenu dans un moule en matériau plastique microperforé comportant un tramage intérieur.

La pression qui doit être exercée sur la pâte dépend principalement du type de fromage que l'on fabrique et certains fromages, comme le Cantal ou le Parmesan, subissent de très fortes pression lors de leur fabrication. Le Cantal, par exemple, subit une pression qui peut aller jusqu'à 2 kg/cm² pendant plusieurs heures. Cela a pour effet de rendre très difficile l'opération de démoulage même lorsque le fond est amovible. Ces problèmes de démoulage sont encore augmentés lorsque la hauteur du fromage est supérieure à sa largeur, comme c'est le cas entre autres pour le Cantal, le Parmesan ou la Tête-de-Moine.

Une solution technique qui a développée pour résoudre ce problème de démoulage consiste à utiliser une machine à démouler sous vide où le moule est introduit dans une cloche dans laquelle le démoulage par air sous pression s'effectue sur toute la surface du moule, c'est-à-dire sur le fond et la paroi. Cette solution a toutefois comme inconvénient d'être excessivement coûteuse et lourde à mettre en oeuvre. Ainsi, du fait de son coût prohibitif, ce type de machines ne peut pas être utilisé par des fromageries de taille moyenne ou petite qui n'ont pas le parc de moules et la production nécessaire pour rentabiliser un tel investissement. De plus, le fait de souffler de l'air sur le fromage apporte des microorganismes qui peuvent provoquer des problèmes d'hygiènes.

Pour d'autres fromages, comme le Gruyère ou l'Emmental par exemple, la pression qui doit être appliquée est environ 6 fois moins forte que pour le Cantal. Ces fromages sont cependant fabriqués sur des presses fixes dans lesquelles le fromage reste plusieurs heures et le problème de démoulage existe également. Ce problème de démoulage existe également dans la fabrication des fromages où l'on utilise des installations dans lesquelles le fromage est acidifié dans le moule après le pressage, ce qui a comme conséquence un accroissement de la durée du séjour du fromage dans le moule qui peut aller jusqu'à 24 heures.

Pour ces différents types de fromage, une solution technique pour résoudre le problème de démoulage consiste à secouer régulièrement le fromage dans le moule à l'aide d'une machine qui fait vibrer l'ensemble et empêche le fromage de coller contre la paroi du moule. Toutefois cette technique a également le désavantage de nécessiter l'utilisation d'une machine.

De plus, lorsque l'on utilise un moule en matériau plastique microperforé traditionnel, le retrait des foncets ne peut être effectué que par une machine, car il faut tirer avec une grande force pour retirer le foncet de l'intérieur du moule.

Dans le domaine de la fabrication artisanale des fromages à pâte pressée, où l'on doit effectuer le démoulage sans machine, on utilise des moules en acier inoxydable conçus de manière à pouvoir s'ouvrir selon le principe d'un moule à gâteau. Bien que ce type de moule permette un démoulage aisé du fromage après pressage, il présente des inconvénients importants dûs au fait qu'il est nécessaire d'entourer le fromage dans une toile afin de réaliser le tramage ce qui nécessite un nombre important de manipulations. Ce type de moule ne présente pas les avantages fournis par les moules en matériau plastique microperforé et de plus, ce type de moule ne peut convenir qu'à une fabrication artisanale du fromage en raison de la difficulté à automatiser les étapes relatives à la manipulation de la toile.

La présente invention a pour principal objectif de remédier à ces inconvénients en fournissant un moule en matériau microperforé permettant un démoulage aisé de n'importe quel type de fromage après pressage de la pâte, sans utiliser de machine coûteuse et par conséquent en fournissant un moule permettant de réduire de manière considérable les investissements nécessaires, tout en simplifiant les installations.

La présente invention a également pour objectif de permettre aux petits fabricants de fromage l'utilisation de moules en matériau plastique microperforé avec les avantages qui en découlent et dont ils n'avaient pas pu profiter jusqu'à présent en raison des problèmes de démoulage.

Grâce à ce moule, la production de fromage pourra être automatisée sans avoir recours à des machines couteuses de démoulage et de retrait du foncet de pressage.

Selon la présente invention, un tel moule comporte une partie récipient pour la pâte ayant une forme généralement cylindrique ou prismatique, ainsi qu'un fond et un couvercle essentiellement parallèles l'un à l'autre et perpendiculaires à l'axe du récipient, les parties du moule en contact avec la pâte étant fabriquées en un matériau plastique présentant des microperforations permettant l'évacuation du liquide lors du pressage de la pâte, au moins le couvercle étant conçu pour être inséré de façon axiale dans la partie récipient et capable de glisser dans la partie récipient à la manière d'un piston, le couvercle et le fond présentant une forme correspondant essentiellement à la section du moule. Il se caractérise par le fait que la partie récipient comporte une paroi en forme d'une bande formant une boucle ronde, carrée ou autre, selon la forme du moule, ladite paroi comportant une fente verticale créant deux extrémités libres de ladite bande, ledit moule comportant un moyen de serrage permettant de serrer lesdites extrémités de la bande l'une contre l'autre de façon à éliminer toute discontinuité au niveau de la surface intérieure de la partie récipient et d'écarter lesdites extrémités de la bande pour agrandir la section du moule de manière à faciliter le démoulage.

Les parties du moule en contact avec la pâte fabriquées en matériau plastique microperforé sont de préférence en polyéthylène ou en polypropylène.

Le moyen de serrage comporte de préférence une poignée de serrage.

La paroi du récipient comporte de préférence un rebord supérieur et un rebord inférieur entre lesquels sont montés deux axes de serrage du moyen de serrage, chaque axe étant monté à proximité d'une des extrémités de la bande.

Les extrémités de la bande comportent de préférence chacune un bloc saillant faisant saillie vers l'extérieur de la bande et s'étendant sur toute la longueur de la fente et en ce que chaque axe de serrage est monté entre les rebords inférieur et supérieur de manière à s'appuyer contre un des blocs saillants.

Les axes sont de préférence reliés fonctionnellement entre eux par des éléments de liaison de manière à pouvoir s'écarter et se rapprocher l'un de l'autre.

De préférence, les axes sont reliés entre eux à au moins deux positions différentes, l'une étant située à proximité du rebord supérieur, l'autre étant située à proximité du rebord inférieur.

De préférence, un des éléments de liaison situé à proximité du rebord supérieur est relié par son extrémité libre à l'extrémité libre d'un des éléments de liaison situé à proximité du rebord inférieur par une barre de liaison parallèle aux axes de serrage, cette barre de liaison faisant office de poignée de serrage.

De préférence, un des éléments de liaison situé à proximité du rebord supérieur est relié à un des éléments de liaison situé à proximité du rebord inférieur par un élément de renfort vertical sur lequel est fixée une plaque, cette plaque s'étendant verticalement jusqu'à proximité des rebords supérieur et inférieur entre les éléments de liaison et la paroi, cette plaque étant disposée de manière à s'appuyer contre les blocs saillants le long de la fente lorsque le moule est en position de fermeture.

La paroi du récipient peut comporter un rebord supérieur et un rebord inférieur entre lesquels sont montés des renforts métalliques.

La partie récipient du moule peut comporter au moins un cerclage métallique articulé entourant la paroi du moule et relié au moyen de serrage.

Dans le cas où la partie récipient du moule comporte des renforts métalliques et un cerclage métallique, ledit cerclage peut passer à travers les renforts métalliques qui comportent des trous prévus à cet effet.

Le fond du moule peut être un fond amovible ou un fond prisonnier, ce fond prisonnier étant retenu au récipient tout en permettant l'ouverture du moule.

Le fond prisonnier peut comporter une partie en matériau plastique microperforé montée sur une partie de support comportant latéralement une partie saillante qui est emboîtée dans un évidement formé dans la paroi intérieure du rebord inférieur de la paroi.

De préférence, les surfaces prévues pour être en contact avec la pâte comportent un tramage obtenu par procédé thermique, par procédé mécanique ou par injection.

Ce moule peut être utilisé pour la fabrication du Cantal ou du Parmesan.

Dans la présente description, on devra comprendre que le terme "forme cylindrique" inclut toutes les formes dont la section comporte des lignes courbes et que le terme "forme prismatique" inclut toute les formes dont la section comprend des angles, étant entendu que cette section peut comporter à la fois des lignes courbes et des angles.

Ainsi, le terme "forme cylindrique ou prismatique" inclut toute les formes dont la section est un cercle, un ovale, un rectangle, un carré ou toute autre forme originale.

Dans la présente description, on devra également comprendre que l'expression "en forme d'une bande formant une boucle ronde, carrée ou autre", signifie que la bande a une forme dont les deux extrémités se rejoignent, quelle que soit la forme de la section de la bande.

D'autres avantages et particularités de l'invention apparaîtront à la lecture de la description suivante dans laquelle l'invention est exposée plus en détails à l'aide de dessins illustrant schématiquement et de manière non limitative une forme d'exécution de la présente invention avec quelques unes de ses variantes.

La figure 1 représente une vue en coupe d'un moule conforme à la présente invention.

La figure 2 représente une vue en coupe du moule représenté sur la figure 1, en position fermée, où seuls les axes du moyen de serrage sont représentés.

La figure 3 représente une vue en coupe du moule représenté sur la figure 2, en position ouverte.

La figure 4 représente une coupe en A du moyen de serrage représenté sur la figure 5, en position fermée.

La figure 5 représente une vue de face du moyen de serrage.

La figure 6 représente une vue en perspective du moyen de serrage.

La figure 7 représente une vue en coupe selon B du moyen de serrage en position fermée représenté sur la figure 5, en position fermée.

La figure 8 représente une vue en coupe du moyen de serrage représenté sur la figure 7, en position ouverte.

La figure 9 représente une vue arrière d'un moule selon une autre variante avec cerclage.

La figure 10 représente une vue en coupe du moule représenté sur la figure 9.

La figure 11 représente une coupe détaillée du fond du moule représenté sur la figure 1.

La figure 12 représente une coupe détaillée d'un fond selon une autre variante.

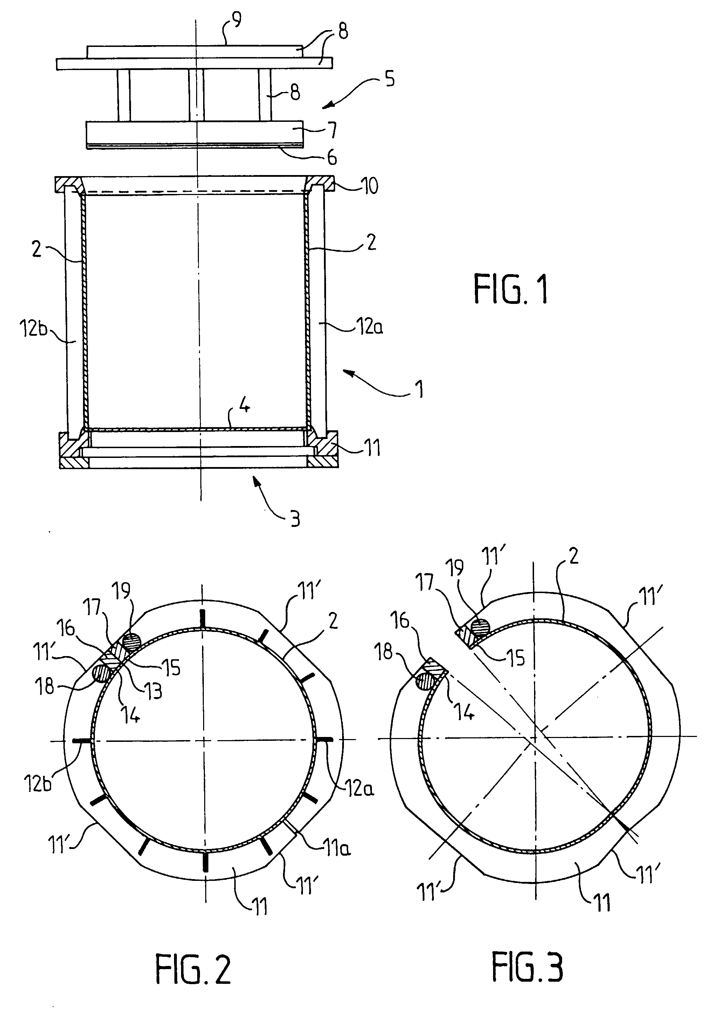

Selon la figure 1, le moule comporte de manière générale une partie récipient 1 comportant une paroi 2 de forme cylindrique circulaire et destinée à recevoir la pâte, un fond 3 comportant une partie 4 et un couvercle 5 comportant une partie 6.

La paroi 2 du récipient 1, la partie 4 du fond 3 et la partie 6 du couvercle 5, qui présentent chacune une surface destinée à être en contact avec la pâte, sont fabriquées en un matériau plastique présentant des microperforations prévues pour permettre l'évacuation du liquide lors du pressage de la pâte.

Le matériau plastique présentant des microperforations dénommé ci-après matériau plastique microperforé, est de préférence du polypropylène microperforé ou du polyéthylène microperforé.

Les surfaces intérieures 2, 4, 6 du moule destinées à être en contact avec la pâte comportent un tramage formé de lignes parallèles en ///// ou en 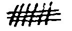 . Ce tramage peut être obtenu par exemple par procédé thermique, par procédé mécanique ou par injection.

Le fond 3 et le couvercle 5, sont essentiellement parallèles l'un à l'autre et sont perpendiculaires à l'axe du récipient 1.

Bien que sur cette figure 1 la surface 4 du fond et la surface 6 du couvercle destinées à être en contact avec la pâte soient représentées avec une forme essentiellement plane, il est évident que ces surfaces peuvent avoir des bords arrondis ou autres, en fonction de la forme du fromage que l'on désire produire.

Le couvercle 5, de forme générale circulaire, destiné à agir comme un piston par coulissement dans la partie récipient 1 sous l'action d'une presse, comporte en outre une partie supérieure 7 en matériau plastique, de préférence du polypropylène ou du polyéthylène, cette partie supérieure 7 étant fixée à la partie 6 en matériau plastique microperforé de préférence par polyfusion.

Cette partie supérieure 7 est surmontée d'une partie 8 dont la surface supérieure 9 est prévue pour recevoir la presse.

Cette surface 9 est essentiellement parallèle à la surface 6 en matériau microperforé du couvercle 5.

La partie supérieure 7 du couvercle 5 présente des ouvertures, non visibles sur la figure, pour permettre le passage du liquide évacué par les microperforations de la surface 6 lors du pressage de la pâte.

Le couvercle 5, utilisé comme foncet de pressage, est conçu pour être inséré de façon axiale dans la partie récipient 1 du moule formée par la paroi 2 et pour être capable de glisser dans le moule à la manière d'un piston.

Ainsi, la surface 6 en matériau microperforé et la partie supérieure 7 du couvercle ont un diamètre identique, correspondant essentiellement au diamètre intérieur formé par la paroi 2 du récipient 1.

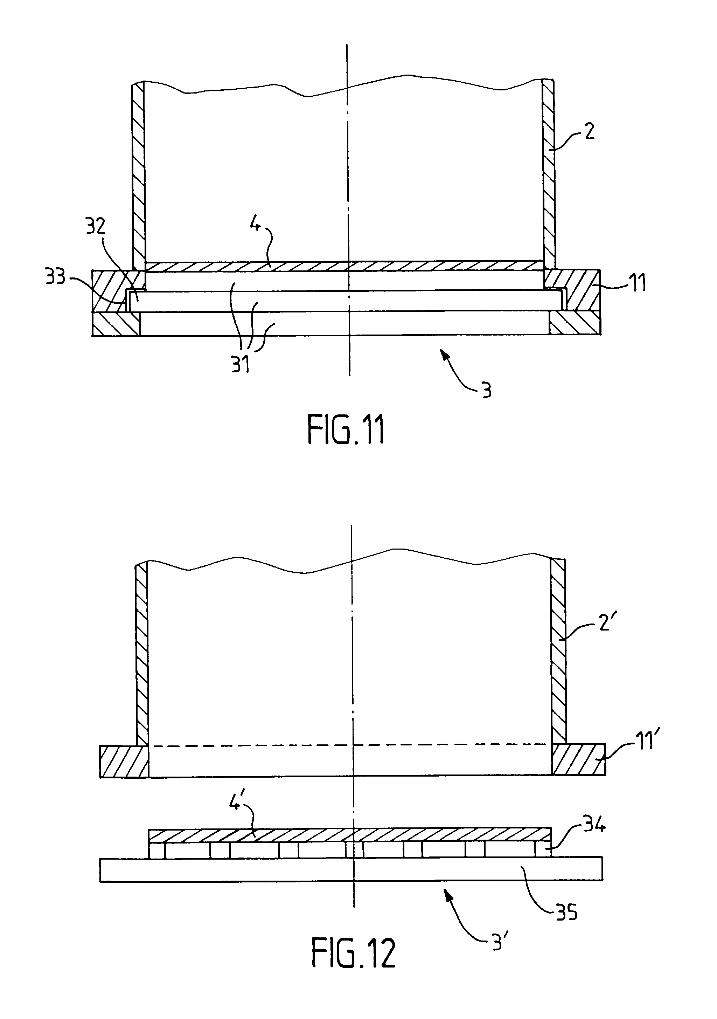

Le fond 3 sera décrit plus loin en référence à la figure 11.

En se référant maintenant aux figures 1, 2 et 3, la paroi cylindrique 2 du récipient comporte un rebord supérieur 10 de forme générale circulaire, ayant une partie en continuation de la surface intérieure de la paroi 2 légèrement évasée vers l'extérieur du récipient, et dont la surface inférieure comporte un évidement en forme de couronne, un rebord inférieur 11 dont la surface supérieure comporte un évidement en forme de couronne, et dix renforts métalliques 12a, 12b, etc, de préférence en acier inoxydable, montés verticalement dans les évidements en forme de couronne des rebords supérieur 11 et inférieur 10 de manière à être bloqués entre les rebords supérieur 10 et inférieur 11 de la paroi 2.

On voit en particulier sur les figures 2 et 3 que la surface extérieure du rebord 11 comporte quatre parties 11' aplaties. Cela s'applique de manière symétrique également à la surface extérieure du rebord 10. Cela à pour but, après création d'un repère sur le moule dans le cas d'une automatisation, de permettre la préhension des moules dans une position toujours identique et bloquée.

Comme représenté sur la figure 1, les extrémités supérieure et inférieure des renforts métalliques comportent un coin coupé du côté du moule.

La paroi cylindrique 2 comporte une fente verticale 13 créant deux extrémités libres 14 et 15 de la paroi 2.

Les extrémités libres 14 et 15 comportent chacune respectivement un bloc saillant 16 et 17 en matériau plastique, par exemple en polypropylène ou en polyéthylène, faisant saillie vers l'extérieur du cylindre et s'étendant sur toute la longueur de la fente 13.

Ces blocs saillants 16 et 17 peuvent être montés sur les extrémités libres 14 et 15 de la paroi 2 en polypropylène microperforé par polyfusion, par exemple.

Ces blocs saillants 16 et 17 sont en contact avec deux axes 18, 19 d'un moyen de serrage, ces axes étant montés verticalement de la même manière que les renforts métalliques 12 dans les évidements en forme de couronne des rebords supérieur 10 et inférieur 11 et par conséquent bloqués entre les rebords supérieur 10 et inférieur 11. Sur les figures 2 et 3, seul les axes 18 et 19 du moyen de serrage sont représentés.

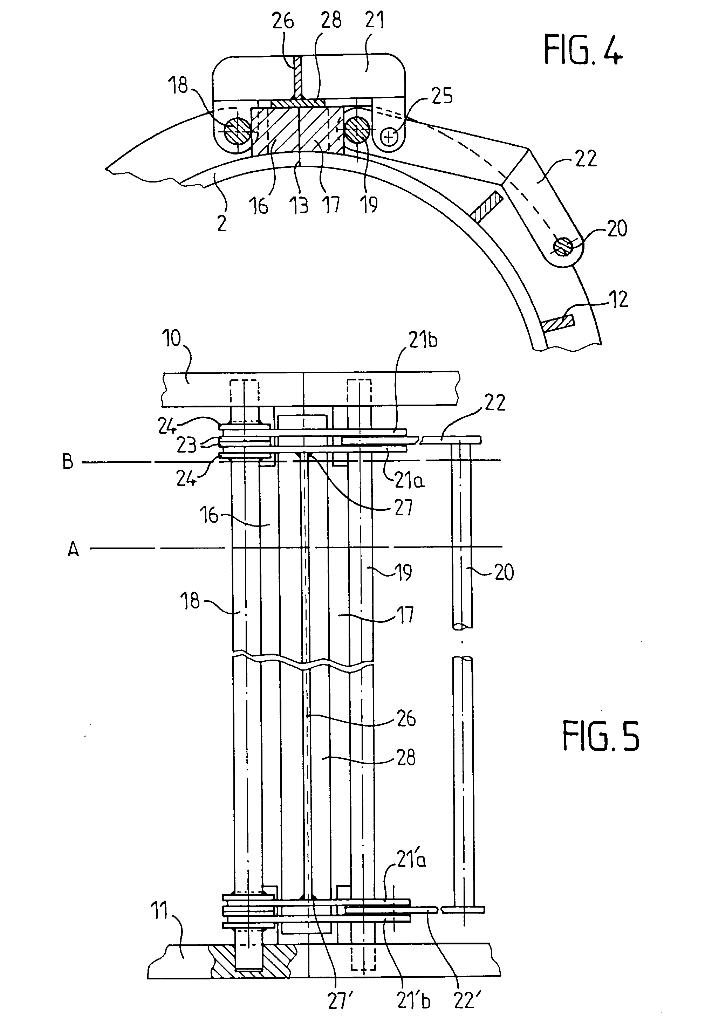

Le moyen de serrage métallique, qui sera décrit en détail ci-après en référence aux figures 4, 5 et 6 permettra de serrer les extrémités libres 14 et 15 de la paroi 2 l'une contre l'autre de façon à éliminer toute discontinuité au niveau de la surface intérieure de la paroi 2 destinée à être en contact avec la pâte comme représenté sur la figure 2, et d'écarter les extrémités libres 14 et 15 de la paroi 2 pour agrandir le diamètre du moule de manière à faciliter le démoulage comme représenté sur la figure 3.

L'ouverture du moule est rendue possible grâce à la flexibilité naturelle du matériau plastique formant la paroi 2.

On pourra également prévoir une fente lla dans les rebords supérieur et inférieur de la paroi du côté opposé au moyen de serrage de manière à éviter de forcer sur le matériau plastique de ces rebords qui ont une épaisseur nettement supérieure à celle de la paroi et par conséquent une rigidité plus grande.

En se référant aux figures 4, 5 et 6, le moyen de serrage métallique, de préférence en acier inoxydable, représenté en position de fermeture, comporte un premier axe vertical 18 et un second axe vertical 19 bloqués entre les rebords supérieur 10 et inférieur 11 de la paroi 2 dans les parties évidées de ces rebords, et une barre de serrage verticale 20.

Ces trois éléments verticaux 18, 19 et 20, disposés parallèlement les uns par rapport aux autres, sont reliés fonctionnellement entre eux à deux hauteurs différentes, l'une étant située à proximité du rebord inférieur 11 et l'autre à proximité du rebord supérieur 10 de la paroi du moule, par des éléments de liaison 21 22 disposés perpendiculairement aux éléments verticaux 18, 19, 20 et décrits ci-après.

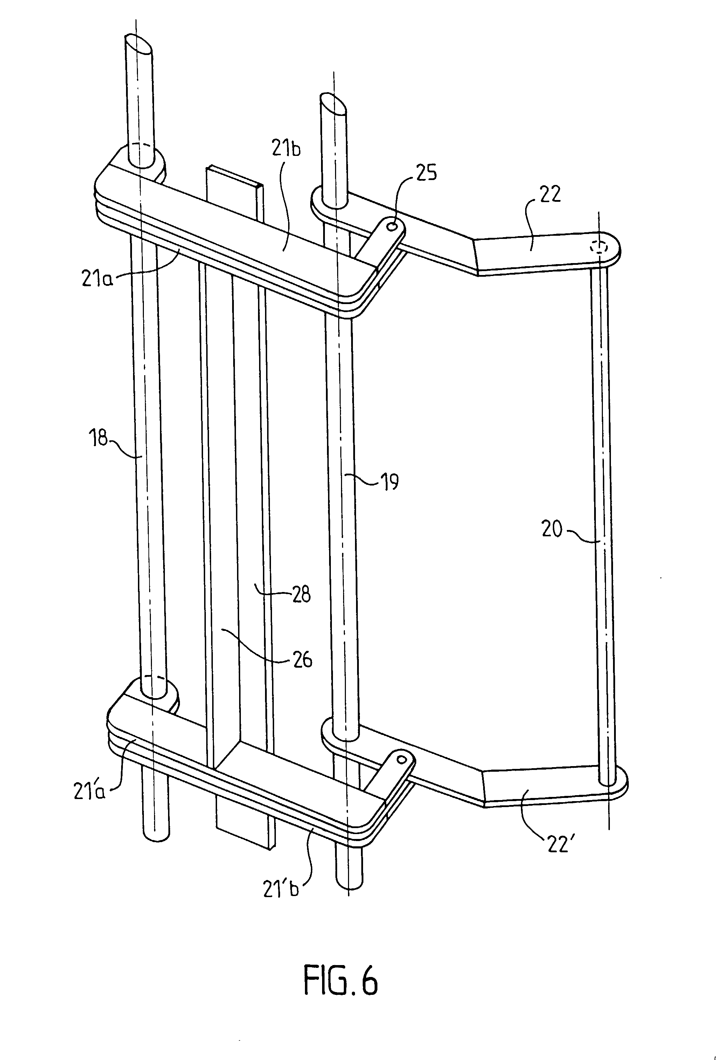

Sur la figure 4 représentant une coupe de la figure 5, on voit un premier élément de liaison 21 en forme de U, dont l'une des branches du U, à proximité de l'une de ses extrémités libres, est montée en rotation autour de l'axe 18, un second élément de liaison 22 ayant une forme coudée dont l'une de ses extrémités libres est montée en rotation autour de l'axe 19 et l'autre extrémité est montée de manière fixe à la barre de serrage 20, l'autre des branches du U du premier élément de liaison 21 étant montée, à proximité de l'autre de ses extrémités libres, au second élément de liaison 22, à proximité de l'axe 19.

En se référant maintenant à la figure 5 représentant une vue de face du moyen de serrage et à la figure 6 représentant une vue en perspective du moyen de serrage isolé, on décrira maintenant en détail le système de liaison des différents éléments de liaison avec les axes et la barre de serrage situé à proximité du rebord supérieur 10 de la paroi.

L'élément de liaison en forme de U 21, monté en rotation autour de l'axe 18 à proximité de sa première extrémité, est constitué de deux plaques identiques 21a et 21b en forme de U, séparées entre elles sur l'axe 18 par deux rondelles entretoises 23, et maintenues sur l'axe 18 dans leur position à proximité du rebord supérieur 10 par deux rondelles 24 soudées à l'axe 18.

Au niveau de leurs secondes extrémités, les plaques 21a et 21b sont séparées par un axe 25 sur lequel est monté en rotation le second élément de liaison 22.

Le second élément de liaison 22 est monté en rotation autour de l'axe 19 à proximité de l'une de ses extrémités libre et est également monté entre les plaques 21a et 21b autour de l'axe 25.

Des éléments de liaison identiques 2l'a, 21'b, 22' sont situés sur les axes 18 et 19 à proximité du rebord inférieur 11 de la paroi.

Le second élément de liaison 22 situé à proximité du rebord supérieur 10 de la paroi et le second élément de liaison 22' situé à proximité du rebord inférieur 11 de la paroi sont reliés entre eux, à proximité de leur extrémité libre respective, par la barre de serrage 20.

Comme on peut le voir sur les figures 4 et 5, la largeur des blocs saillants 16 et 17 varie entre deux grandeurs. Ainsi, les blocs saillants 16 et 17 ont une largeur déterminée de manière à ce qu'ils soient pressés l'un contre l'autre par les axes 18 et 19 entre la position située à proximité du rebord inférieur 11 et la position située à proximité du rebord supérieur 10 où sont montées les deux séries identiques d'éléments de liaison, et une autre largeur plus faible choisie de manière à ne pas gêner la fermeture et l'ouverture du moule dans les deux positions où sont montées les deux séries identiques d'éléments de liaison.

En se référant maintenant aux figures 4, 5 et 6, on voit que les barres de liaison 21a et 21'a sont reliées entre elles par une barre de renfort métallique 26 verticale.

Comme représenté sur la figure 5, une extrémité 27 de la barre de renfort 26 est soudée sur une surface de la plaque de liaison 21a et l'autre extrémité 27' de la barre de renfort 26 est soudée sur une surface de la plaque de liaison 21'a.

En se référant aux figures 4, 5 et 6, on voit de plus une plaque 28 soudée à la barre de renfort 26 et s'étendant verticalement jusqu'à proximité des rebords inférieur 11 et supérieur 10 de manière à ce qu'elle soit située entre la paroi 2 du moule et les éléments de liaison 21, 22, cette plaque 28 étant pressée contre les blocs saillants 16 et 17, le long de la fente 13 jusqu'à proximité des rebords supérieur 10 et inférieur 11.

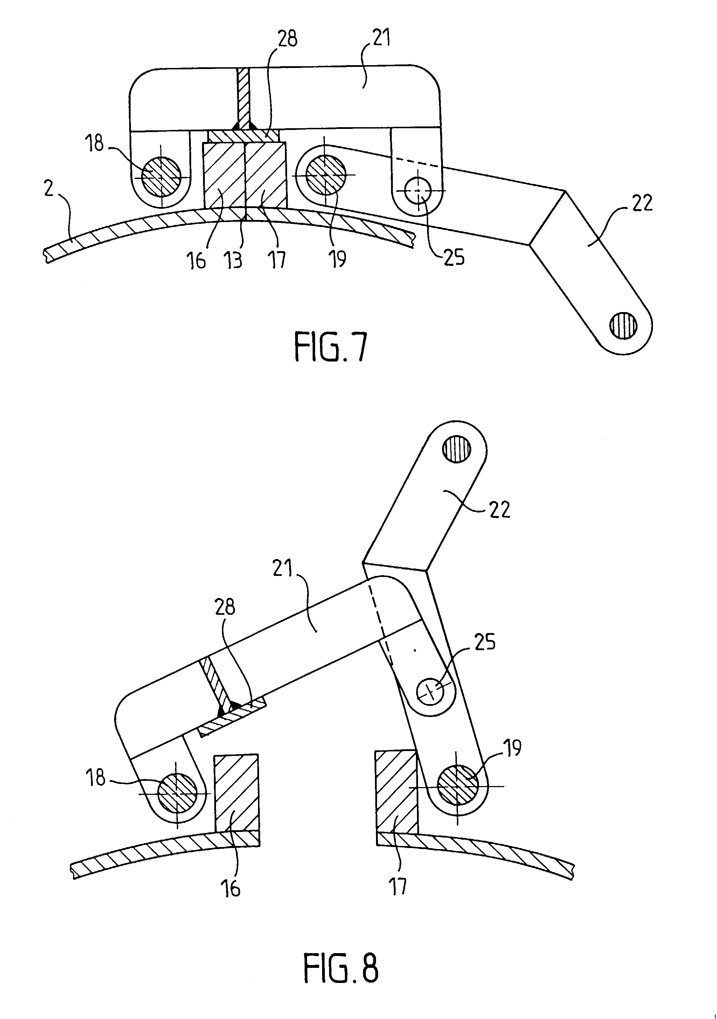

Les figures 7 et 8 représentent une coupe du moyen de serrage représenté sur la figure 5 à une position où les blocs saillants 16 et 17 sont le moins larges, c'est-à-dire où ils ont une largeur déterminée pour ne pas gêner l'ouverture et la fermeture du moule.

Sur la figure 7, le moyen de serrage est en position de fermeture et l'on voit clairement la plaque pressée 28 contre les blocs saillants 16 et 17 au niveau de la fente 13. En se référant aux figures 5 et 7, pour ouvrir le moule, on tire perpendiculairement sur la barre de serrage 20 ce qui a pour conséquence de faire pivoter les éléments de liaison 22 et 22' autour de l'axe 19, et de faire pivoter les éléments de liaison 22 et 22' autour des axes 25, 25' reliant la plaque 21a à la plaque 21b et la plaque 2l'a à la plaque 21'b, ce qui a pour effet d'écarter les extrémités libres 14, 15 de la paroi 2 au niveau de la fente 13 et d'obtenir la position d'ouverture telle que représentée sur la figure 8.

Dans cette position d'ouverture, le moule a un diamètre plus large qu'en position de fermeture et par conséquent le démoulage est facilité. De plus, l'enlèvement du foncet de pressage peut être effectué manuellement sans effort.

Bien que le moyen de serrage ait été décrit avec des éléments de liaison situées seulement en deux positions, c'est-à-dire à proximité du rebord supérieur 10 et à proximité du rebord inférieur 11, il va de soi que l'on pourra prévoir des éléments de liaison supplémentaires à d'autres positions. En particulier, l'adjonction d'un troisième système de liaison à égale distance entre les éléments de liaison 21, 22 situés à proximité du rebord supérieur 10 et les éléments de liaison 21', 22' situés à proximité du rebord inférieur 11 est particulièrement avantageuse dans le cas des moules dont la hauteur est élevée.

Il va de soi qu'avec un tel moyen de serrage, une automatisation de l'ouverture et de la fermeture des moules sera très simple puisqu'il suffira de prévoir une machine appuyant sur la barre de serrage 20 pour fermer le moule et tirant sur la barre de serrage 20 pour ouvrir le moule.

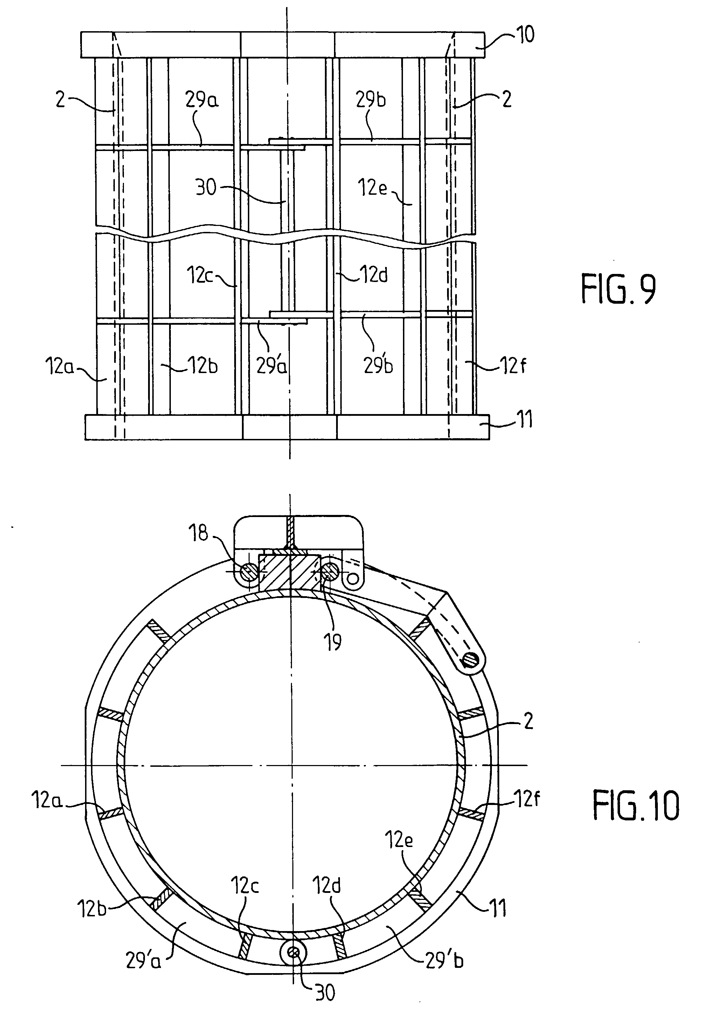

Selon une variante de cette forme d'exécution, le moule peut comporter des cerclages métalliques, de préférence en acier inoxydable, articulés comme représenté sur les figures 9 et 10 où l'on voit respectivement le moule du côté opposé au moyen de serrage et le moule en coupe au niveau des éléments de liaison du moyen de serrage.

En se référant aux figures 9 et 10, on voit la paroi 2 comportant un rebord supérieur 10 et un rebord inférieur 11 entre lesquels sont montés des renforts métalliques 12.

Ce moule comporte deux cerclages 29, 29' entourant la paroi 2, et passant à travers les renforts métalliques 12 comportant des trous prévus à cet effet, le premier étant situé plus proche du rebord supérieur 10 et le second étant situé plus proche du rebord inférieur 11.

Chaque cerclage 29, 29' est constitué de deux éléments essentiellement semi-circulaires 29a, 29b, 29'a, 29'b.

Le premier élément semi-circulaire 29a du cerclage situé plus proche du rebord supérieur 10 est monté, à l'une de ses extrémités, en pivotement autour de l'axe 18.

Le second élément semi-circulaire 29b du cerclage situé plus proche du rebord supérieur 10 est monté, à l'une de ses extrémités, en pivotement autour de l'axe 19.

De même, le premier élément semi-circulaire 29'a du cerclage situé plus proche du rebord inférieur 11 est monté, à l'une de ses extrémités, en pivotement autour de l'axe 18 et le second élément semi-circulaire 29'b du cerclage situé plus proche du rebord inférieur 11 est monté, à l'une de ses extrémités, en pivotement autour de l'axe 19.

La seconde extrémité du second élément semi-circulaire 29b situé plus proche du rebord supérieur 10 est relié à la seconde extrémité du premier élément semi-circulaire 29'a situé plus proche du rebord inférieur par un axe d'articulation 30 sur lequel est monté en rotation la seconde extrémité du premier élément semi-circulaire 29a situé plus proche du rebord supérieur 10 et la seconde extrémité du second élément semi-circulaire 29'b situé plus proche du rebord inférieur.

Ces deux cerclage 29, 29' sont de cette manière articulés de manière à ne pas créer de tension sur le métal du côté opposé au moyen de serrage lors de l'ouverture du moule.

Il va de soit que l'on pourra prévoir d'autres cerclages supplémentaires, ces cerclages supplémentaires pouvant être montés soit au même niveau que les éléments de liaison 21 et 22, soit à n'importe quelle position sur les axes 18 et 19, indépendamment de la position des éléments de liaison.

Le moyen de serrage que nous venons de décrire, avec cerclage de renfort ou non autour du moule, est particulièrement bien adapté pour les moules utilisés dans la fabrication du Cantal ou du Parmesan qui, comme nous l'avons déjà indiqué précédemment, nécessite l'application d'une pression très élevée.

Toutefois, pour les moules destinés à la fabrication de fromages nécessitant l'application d'une pression moins élevée, par exemple aux environs de 450 g/cm² ou moins, un moyen de serrage simplifié suffira. Ainsi, le type de moyen de serrage qui devra être monté sur le moule dépendra principalement de la pression maximale exercée sur la pâte lors de l'étape de pressage.

Il a été décrit ci-dessus en détail un moule comportant dix renforts métalliques et un autre moule comportant des renforts métalliques avec des cerclages entourant la paroi qui passent à travers les renforts métalliques. Toutefois, il doit être compris que lorsque le moule comporte des renforts métalliques, il peut comporter un nombre de renfort métallique différent de dix, que selon d'autres formes d'exécution de la présente invention le moule peut comporter des cerclages entourant la paroi du moule mais pas de renforts métalliques, que selon encore d'autres formes d'exécution de la présente invention le moule peut comporter ni renforts métalliques, ni cerclages entourant la paroi, et que selon encore d'autres formes d'exécution de la présente invention le moule peut comporter des renforts métalliques et des cerclages ne passant pas à travers les renforts métalliques.

On va décrire maintenant en détail et en référence à la figure 11, le fond 3 du moule représenté sur la figure 1. Sur la figure 11, on voit la partie inférieure du moule comportant une paroi 2 avec un rebord inférieur 11 et un fond 3.

Ce fond 3 comporte une partie circulaire 4 en matériau plastique microperforé montée sur une partie de support 31 en matériau plastique. Cette partie de support 31 comporte latéralement une couronne circulaire 32 saillante qui s'emboîte dans un évidement 33 en forme de couronne formé dans la paroi intérieure du rebord inférieur 11. Cette partie de support 31 comporte également des ouvertures, non-représentées, pour permettre le passage du liquide évacué par les microperforations de la partie 4 lors du pressage de la pâte.

Cette construction a comme avantage de retenir le fond 3 à la partie récipient 1 tout en permettant l'ouverture et la fermeture du moule.

Selon une autre variante, le moule de la présente invention peut comporter un fond amovible tel que représenté sur la figure 12, où l'on peut voir la partie inférieure du moule comportant la paroi 2' avec son rebord inférieur 11' et le fond 3'.

Ce fond 3' comporte une partie circulaire 4' en matériau plastique microperforé montée sur un support.

Ce support comporte une première partie 34 de même diamètre que la partie 4' et une seconde partie 35 ayant un diamètre de préférence équivalent au diamètre extérieur du moule au niveau du rebord 11'. La partie 4' et la première partie 34 du support auront ensemble de préférence une hauteur équivalente à la hauteur du rebord 11 de manière à ce que la partie 4' du fond soit exactement ajustée à la paroi 2 lorsque le fond est inséré dans la partie inférieure du récipient avec la partie 35 en butée contre le rebord 11'. La partie 34 et la partie 35 comportent des ouvertures pour permettre le passage du liquide évacué par les microperforations de la partie 4' lors du pressage de la pâte.

Cette forme d'exécution est particulièrement avantageuse dans la fabrication des fromages qui doivent être retournés fréquemment lors du pressage puisque avec un tel fond amovible, il sera possible d'ôter le fond pour le remplacer par le foncet de pressage et vice-versa, après avoir retourné le moule contenant la pâte pressée.

Les parties métalliques des moules conforme à la présente invention seront de préférence en acier inoxydable tandis que les parties en matériau plastique seront de préférence en polyéthylène ou en polypropylène.

Les différentes parties en matériau plastique seront de préférence maintenues entre elles par polyfusion, ce qui est particulièrement avantageux du point de vue de l'hygiène. Toutefois, elles peuvent également être maintenues entre elle par des vis ou similaire.

Il va de soi que la taille et la forme du moule conforme à la présente invention variera en fonction du fromage que l'on désire fabriquer.

En conclusion, le moule de la présente invention apporte une économie très importante en évitant l'utilisation de machines de démoulage complexe et très onéreuses, une solution économique, simple et efficace pour les petites et moyennes fromageries et une solution rentable pour les groupes industriels qui pourront automatiser le système d'ouverture et de fermeture des moules par un poste de mécanisation nettement moins couteux que la machine à démouler.

## Revendications

1. Moule pour fromage à pâte pressée, comportant une partie récipient (1) pour la pâte ayant une forme généralement cylindrique ou prismatique, ainsi qu'un fond (3) et un couvercle (5) essentiellement parallèles l'un à l'autre et perpendiculaires à l'axe du récipient (1), les parties (2, 4, 6) du moule en contact avec la pâte étant fabriquées en un matériau plastique présentant des microperforations permettant l'évacuation du liquide lors du pressage de la pâte, au moins le couvercle (5) étant conçu pour être inséré de façon axiale dans la partie récipient (1) et capable de glisser dans la partie récipient (1) à la manière d'un piston, le couvercle (5) et le fond (3) présentant une forme correspondant essentiellement à la section du moule, caractérisé en ce que la partie récipient (1) comporte une paroi (2) en forme d'une bande formant une boucle ronde, carrée ou autre, selon la forme du moule, ladite paroi (2) comportant une fente verticale (13) créant deux extrémités libres (14) (15) de ladite bande, ledit moule comportant un moyen de serrage (18, 19, 20, 21, 22) permettant de serrer lesdites extrémités (14, 15) de la bande (2) l'une contre l'autre de façon à éliminer toute discontinuité au niveau de la surface intérieure de la partie récipient et d'écarter lesdites extrémités (14, 15) de la bande (2) pour agrandir la section du moule de manière à faciliter le démoulage.

2. Moule pour fromage à pâte pressée selon la revendication 1, caractérisé en ce que les parties (2, 4, 6) du moule en contact avec la pâte fabriquées en matériau plastique microperforé sont en polyéthylène ou en polypropylène.

3. Moule pour fromage à pâte pressée selon l'une des revendications 1 ou 2, caractérisé en ce que le moyen de serrage comporte une poignée de serrage (20).

4. Moule pour fromage à pâte pressée selon l'une quelconque des revendications 1 à 3, caractérisé en ce que la paroi (2) du récipient comporte un rebord supérieur (10) et un rebord inférieur (11) entre lesquels sont montés deux axes de serrage (18, 19) du moyen de serrage, chaque axe (18, 19) étant monté à proximité d'une des extrémités (14, 15) de la bande (2).

5. Moule pour fromage à pâte pressée selon la revendication 4, caractérisé en ce que les extrémités (14, 15) de la bande (2) comportent chacune un bloc saillant (16, 17), faisant saillie vers l'extérieur de la paroi (2) et s'étendant sur toute la longueur de la fente (13) et en ce que chaque axe de serrage (18, 19) est monté entre les rebords inférieur (11) et supérieur (10) de manière à s'appuyer contre un des blocs saillants.

6. Moule pour fromage à pâte pressée selon la revendication 4 ou 5, caractérisé en ce que les axes (18, 19) sont reliés fonctionnellement entre eux par des éléments de liaison (21, 22; 21', 22') de manière à pouvoir s'écarter et se rapprocher l'un de l'autre.

7. Moule pour fromage à pâte pressée selon la revendication 6, caractérisé en ce que les axes (18, 19) sont reliés entre eux à au moins deux positions différentes, l'une étant située à proximité du rebord supérieur (10), l'autre étant située à proximité du rebord inférieur (11).

8. Moule pour fromage à pâte pressée selon la revendication 7, caractérisé en ce que un des éléments de liaison (22) situé à proximité du rebord supérieur (10) est relié par son extrémité libre à l'extrémité libre d'un des éléments de liaison (22') situé à proximité du rebord inférieur par une barre de liaison (20) parallèle aux axes de serrage (18, 19), cette barre de liaison faisant office de poignée de serrage.

9. Moule pour fromage à pâte pressée selon l'une des revendications 7 ou 8, caractérisé en ce que un des éléments de liaison (21a) situé à proximité du rebord supérieur (10) est relié à un des éléments de liaison (21'a) situé à proximité du rebord inférieur (11) par un élément de renfort (26) vertical sur lequel est fixée une plaque (28), cette plaque (28) s'étendant verticalement jusqu'à proximité des rebords supérieur (10) et inférieur (11) entre les éléments de liaison (21, 22; 21', 22') et la paroi (2), cette plaque (28) étant disposée de manière à s'appuyer contre les blocs saillants (14, 15) le long de la fente (13) lorsque le moule est en position de fermeture.

10. Moule pour fromage à pâte pressée selon l'une quelconque des revendications 1 à 9, caractérisé en ce que la paroi (2) du récipient comporte un rebord supérieur (10) et un rebord inférieur (11) entre lesquels sont montés des renforts métalliques (12).

11. Moule pour fromage à pâte pressée selon la revendication 10, caractérisé en ce que la partie récipient du moule comporte au moins un cerclage métallique (29) articulé entourant la paroi (2) du moule et relié au moyen de serrage, ledit cerclage (29) passant à travers les renforts métalliques (12) qui comportent des trous prévus à cet effet.

12. Moule pour fromage à pâte pressée selon l'une quelconque des revendications 1 à 9, caractérisé en ce que la partie récipient du moule comporte au moins un cerclage métallique (29) articulé entourant la paroi (2) du moule et relié au moyen de serrage.

13. Moule pour fromage à pâte pressée selon l'une quelconque des revendications 1 à 12, caractérisé en ce que le fond (3) du moule est un fond amovible.

14. Moule pour fromage à pâte pressée selon l'une quelconque des revendications 1 à 12, caractérisé en ce que le fond (3) du moule est un fond dénommé fond prisonnier, ce fond prisonnier étant retenu au récipient tout en permettant l'ouverture du moule.

15. Moule pour fromage à pâte pressée selon la revendication 14, caractérisé en ce que le fond prisonnier comporte une partie (4) en matériau plastique microperforé montée sur une partie de support (31) comportant latéralement une partie saillante (32) qui est emboîtée dans un évidement (33) formé dans la paroi intérieure du rebord inférieur (11) de la paroi (2).

16. Moule pour fromage à pâte pressée selon l'une quelconque des revendications 1 à 15, caractérisé en ce que les surfaces (2, 4, 6) prévues pour être en contact avec la pâte comportent un tramage.

17. Utilisation d'un moule selon l'une quelconque des revendications 1 à 16, pour la fabrication du Cantal ou du Parmesan.
